# EUROPÄISCHE PATENTANMELDUNG

(11) **EP 4 147 579 A1**
(43) Veröffentlichungstag der Anmeldung: **15.03.2023**
(21) Anmeldenummer: 22205437.1
(22) Anmeldetag: 07.07.2020
(51) Int. Cl.: A22C 17/00

(54) **SCHNEIDVORRICHTUNG**

(30) Priorität: 02.09.2019 DE 102019123487; 06.09.2019 DE 102019123999
(62) Teilanmeldung aus: 20184359.6
(71) Anmelder: Textor Maschinenbau GmbH, 87787 Wolfertschwenden (DE)
(72) Erfinder: Aainani, Abdessamad, 87730 Bad Grönenbach (DE); Mayer, Josef, 87766 Memmingerberg (DE); Müller, Fabian, 87488 Betzigau (DE); Seidel, Markus, 87743 Egg an der Günz (DE); Hehle, Matthias, 87448 Waltenhofen (DE); Schaub, Joachim, 35116 Hatzfeld-Reddinghausen (DE); Schmeiser, Jörg, 87487 Wiggensbach (DE)
(74) Vertreter: Manitz Finsterwald Patent- und Rechtsanwaltspartnerschaft mbB

(57) **Zusammenfassung**

Eine Schneidvorrichtung (11) zum Aufschneiden und/oder Zerteilen von Fleischprodukten (13, 15), insbesondere Frischfleischprodukten, umfasst eine Produktzufuhr (23), die dazu ausgebildet ist, zumindest ein erstes Produkt (13) und zumindest ein zweites Produkt (15) gleichzeitig in einen Schneidbereich (17) zu führen, in welchem von den Produkten (13, 15) mittels eines ersten rotierenden Messers (19) und mittels eines zweiten rotierenden Messers (21) Scheiben und/oder Stücke abgetrennt werden. Dabei weist die Produktzufuhr (23) ein erstes Fördermittel (25) zum Führen des zumindest einen ersten Produktes (13) in den Schneidbereich (17) und ein zweites Fördermittel (27) zum Führen des zumindest einen zweiten Produktes (15) in den Schneidbereich (17) auf, wobei das erste Messer (19) dem ersten Fördermittel (25) zugeordnet ist und zu einem Abtrennen von Scheiben und/oder Stücken von dem zumindest einen ersten Produkt (13) vorgesehen ist und wobei das zweite Messer (21) dem zweiten Fördermittel (27) zugeordnet ist und zu einem Abtrennen von Scheiben und/oder Stücken von dem zumindest einen zweiten Produkt (15) vorgesehen ist.

## Beschreibung

Die Erfindung betrifft eine Schneidvorrichtung zum Aufschneiden und/oder Zerteilen von Fleischprodukten, insbesondere Frischfleischprodukten, mit einer Produktzufuhr, die dazu ausgebildet ist, zumindest ein erstes Produkt und zumindest ein zweites Produkt gleichzeitig entlang einer Zuführrichtung in einen Schneidbereich zu führen, in welchem von den Produkten Scheiben und/oder Stücke abgetrennt werden.

Ferner betrifft die Erfindung ein Verfahren zum Aufschneiden und/oder Zerteilen von Fleischprodukten, insbesondere von Frischfleischprodukten.

Im Zuge eines Verarbeitungsprozesses von Fleischprodukten und insbesondere von Frischfleischprodukten kann es häufig vorgesehen sein, verhältnismäßig große Naturfleischstücke in Scheiben oder vereinzelte Stücke aufzuschneiden bzw. zu teilen und derart zum Verkauf anzubieten. Beispielsweise können Kotelettscheiben vor einem Verkauf bzw. einer Lieferung an einen Verkäufer durch ein Aufschneiden verhältnismäßig großer Rippenstücke eines Tieres erzeugt und gegebenenfalls als Portion, die zumindest eine solche Scheibe umfasst, zusammengestellt und/oder verpackt werden. Ebenfalls kann es vorgesehen sein, große Bratenstücke vor einem Verkauf in bedarfsgerechte Teilstücke zu zerteilen oder auch ein solches Fleischprodukt in zum Verkauf anzubietende Scheiben aufzuschneiden.

Um bei einer derartigen Verarbeitung von Frischfleischprodukten einen gewünschten Produktdurchsatz erreichen zu können, kann das Aufschneiden bzw. Zerteilen der Fleischprodukte maschinell mittels einer Schneidvorrichtung erfolgen. Dabei können die Produkte auf eine Produktzufuhr geladen und durch diese automatisch in einen Schneidbereich geführt werden, in welchem von den Produkten Scheiben und/oder Stücke abgetrennt werden. Um den Produktdurchsatz weiter zu erhöhen, kann es ferner vorgesehen sein, mehrere bzw. zumindest zwei Produkte gleichzeitig in den genannten Schneidbereich zu führen, sodass diese Produkte gleichzeitig in Scheiben und/oder Stücke geschnitten werden können.

Insbesondere bei der Verarbeitung von Frischfleischprodukten ergibt sich jedoch die Problematik, dass zu einem Aufschneiden bzw. Zerteilen solcher Produkte äußerst hohe Schneidkräfte und präzise Schnitte erforderlich sind, um beispielsweise Knochen aufweisende Produkte zuverlässig und insbesondere ohne die Gefahr eines Splitterns des Knochens zerteilen zu können. Darüber hinaus können solche zu verarbeitenden Naturprodukte große Unterschiede, beispielsweise hinsichtlich der Struktur des Gewebes oder der Lage und Dicke von Knochen, aufweisen, so dass gegebenenfalls eine Anpassung des Schneidvorgangs an ein jeweiliges Produkt bzw. verschiedene Produktchargen erforderlich sein kann. Auch die gewünschte Dicke der Scheiben bzw. Größe der Stücke, welche von einem Produkt abgetrennt werden, kann insbesondere in Abhängigkeit von der jeweiligen Produktart und der damit verbundenen Art, in welcher das Produkt zum Verkauf angeboten werden soll, variieren, so dass der Schneidvorgang auch dahingehend anzupassen sein kann.

Ferner kann auch bei der Verarbeitung prinzipiell gleichartiger und entsprechend gleichartig zu verarbeitender Frischfleischprodukte, beispielsweise bei einer Verarbeitung von Rippenstücken eines Tieres, eine Anpassung des Schneidprozesses dadurch erforderlich sein, dass in einer Charge Stücke verarbeitet werden, die von verschiedenen Hälften eines Tieres entnommen wurden. Insbesondere kann dabei für Produkte von verschiedenen Hälften eines Tieres die Lage eines Knochens gerade entgegengesetzt sein, sodass ein an Produkte einer Hälfte eines Tieres angepasster Schneidvorgang gerade die entgegengesetzten Einstellungen für Produkte der anderen Hälfte erfordert.

Diese Schwierigkeiten bei einem Verarbeiten von Fleischprodukten und insbesondere von Frischfleischprodukten bedingen in der Regel äußerst komplexe und platzintensive Konstruktionen der zu einem Aufschneiden und/oder Zerteilen der Produkte vorgesehenen Schneidvorrichtungen. Häufig ist ein gewünschter Produktdurchsatz, um beispielsweise Produkte von verschiedenen Hälften eines Tieres oder verschiedenartige Produkte gleichzeitig verarbeiten zu können, nur dadurch zu erreichen, dass mehrere gesonderte Schneidvorrichtungen zur Verarbeitung der Produkte vorgesehen werden. Dies erfordert jedoch - zusätzlich zu den erheblichen Mehrkosten für die Anschaffung einer weiteren Maschine - einen in der Praxis meist nicht ausreichend zur Verfügung stehenden Raum sowie eine komplizierte und zeitaufwendige Sortierung und Zuführung der Produkte zu den einzelnen Maschinen.

Es ist daher eine Aufgabe der Erfindung, eine Schneidvorrichtung der eingangs genannten Art zu schaffen, welche es bei einem kompakten Aufbau ermöglicht, einen flexiblen und an die Anforderungen zur Verarbeitung derartiger Produkte angepassten Schneidvorgang und einen hohen Produktdurchsatz zu erreichen.

Diese Aufgabe wird gelöst durch eine Schneidvorrichtung mit den Merkmalen des Anspruchs 1 und insbesondere dadurch, dass in dem Schneidbereich von den Produkten mittels eines ersten rotierenden Messers und mittels eines zweiten rotierenden Messers Scheiben und/oder Stücke abgetrennt werden, wobei die Produktzufuhr ein erstes Fördermittel zum Führen des zumindest einen ersten Produktes in den Schneidbereich und ein zweites Fördermittel zum Führen des zumindest einen zweiten Produktes in den Schneidbereich aufweist, wobei das erste Messer dem ersten Fördermittel zugeordnet ist und zu einem Abtrennen von Scheiben und/oder Stücken von dem zumindest einen ersten Produkt vorgesehen ist und wobei das zweite Messer dem zweiten Fördermittel zugeordnet ist und zu einem Abtrennen von Scheiben und/oder Stücken von zumindest einem zweiten Produkt vorgesehen ist.

Hinsichtlich der Verarbeitung von Fleischprodukten und insbesondere Frischfleischprodukten kann es dabei vorgesehen sein, verhältnismäßig dicke Scheiben, beispielsweise etwa 5 cm dicke Koteletts, von den Produkten abzutrennen, sodass die genannten abgetrennten Scheiben auch als kleine Stücke der Produkte verstanden werden können. Ferner können derartige Fleischprodukte auch in relativ große, nicht mehr scheibenartige Teilstücke zerteilt werden, indem beispielsweise ein Bratenstück in bedarfsgerechte Portionen geteilt wird.

Indem für das erste Produkt und das zweite Produkt ein jeweiliges Fördermittel vorgesehen ist, mittels dessen das erste bzw. das zweite Produkt in den Schneidbereich geführt wird, und indem von den jeweiligen Produkten mittels gesonderter Messer Scheiben und/oder Stücke abgetrennt werden, können die Produkte vollständig unabhängig voneinander verarbeitet werden. Dazu können die Fördermittel und die rotierenden Messer insbesondere unabhängig voneinander antreibbar sein, sodass der Schneidvorgang sowohl für die mittels des ersten Fördermittels zugeführten ersten Produkte als auch für die mittels des zweiten Fördermittels zugeführten zweiten Produkte speziell angepasst durchgeführt werden kann. Es kann somit ein gleichzeitiger und unabhängiger Schneidbetrieb für mehrspurig in den Schneidbereich geführte Fleischprodukte bzw. Frischfleischprodukte bei einem einzigen und entsprechend kompakten und platzsparenden maschinellen Aufbau erreicht werden.

Beispielsweise können verschiedenartige Produkte gleichzeitig durch ein jeweiliges der Fördermittel in den Schneidbereich geführt und verarbeitet werden, so dass zum Beispiel mit dem einen Fördermittel zu Koteletts zu verarbeitende Rippenstücke und gleichzeitig mit dem anderen Fördermittel in Stücke zu zerteilende Bratenstücke in den Schneidbereich geführt werden können. Dabei kann der Schneidvorgang, indem auch jeweilige zugeordnete Messer und nicht lediglich ein gemeines Messer zum Zerteilen der gleichzeitig in den Schneidbereich geführten Produkte vorgesehen sind, exakt an die Anforderungen der zugeführten Produkte angepasst werden. So können beispielsweise mittels des ersten Messers verhältnismäßig schmale Kotelettscheiben von dem ersten Produkt abgetrennt werden, während von einem durch das zweite Fördermittel in den Schneidbereich geführten zweiten Produkt gleichzeitig durch das zweite Messer im Vergleich dazu relativ große Teilstücke abgetrennt werden können.

Ferner kann es vorgesehen sein, die beiden Fördermittel und die jeweiligen zugeordneten Messer derart aufeinander abzustimmen, dass mittels der Schneidvorrichtung gleichzeitig Produkte von verschiedenen Hälften eines Tieres bei optimal angepassten Schneidvorgängen aufgeschnitten bzw. zerteilt werden können.

Dazu können die Messer insbesondere gegensinnig zueinander rotieren, so dass der Schneidprozess für mittels des ersten Fördermittels und mittels des zweiten Fördermittels zugeführte Produkte gewissermaßen gespiegelt erfolgen kann. Durch eine Sortierung bzw. Zuordnung der Produkte verschiedener Hälften eines Tieres zu den jeweiligen Fördermitteln kann somit erreicht werden, dass ein Produkt mit einem Knochen unabhängig von der Hälfte eines Tieres, von welchem das Produkt entnommen wurde, beispielsweise stets radial innenliegend oder radial außenliegend bezüglich der jeweiligen Rotationsachse der Messer in den Schneidbereich geführt wird. Insbesondere kann dabei ein optimal angepasster Schneidvorgang für Produkte beider Tierhälften bei gleichen Einstellungen, wie gleichen Rotationsgeschwindigkeiten der Messer oder gleichen Zuführgeschwindigkeiten der Produkte, erreicht werden. Aufgrund des Aufbaus in einer einzigen Maschine kann das Sortieren und Beladen der Produkte auf die jeweiligen Fördermittel unkompliziert und schnell erfolgen.

Durch die Möglichkeit, zumindest zwei Produkte unabhängig voneinander und gleichzeitig mit einem einzigen maschinellen Aufbau zu verarbeiten, können die zu einem solchen unabhängigen Betrieb notwendige Anzahl an Bauteilen und entsprechend der Platzbedarf der Schneidvorrichtung minimiert werden. Dabei können bestimmte Funktionen bzw. Bauteile, die grundsätzlich bei einem unabhängigen Betrieb mit mehreren Maschinen mehrfach vorzusehen sind, gemeinsam für die mittels des ersten und die mittels des zweiten Fördermittels zugeführten Produkte vorgesehen werden und eine kompakte Anordnung erreicht werden. Insbesondere kann die Schneidvorrichtung beispielsweise ein gemeinsames und kompaktes Gehäuse für beide Fördermittel und beide Messer aufweisen und die Messer können durch einen gemeinsamen Zugriffsschutz abgeschirmt werden. Ferner können eine gemeinsame Steuereinrichtung bzw. ein gemeinsamer Schaltkasten zur Anordnung der elektronischen Komponenten der Schneidvorrichtung oder gemeinsame Motoren, beispielsweise zum Antrieb der Messer, vorgesehen sein.

Indem die Fördermittel insbesondere unabhängig voneinander antreibbar sein können und grundsätzlich unabhängig voneinander mit Produkten beladen werden können, kann in bestimmten Betriebssituationen auch lediglich eines der Fördermittel genutzt werden, um Produkte in den Schneidbereich zu führen. Dies kann beispielsweise bei einer geringen Auslastung der Schneidvorrichtung oder bei speziellen Produktchargen vorgesehen sein, welche beispielsweise ausschließlich Produkte einer Tierhälfte umfassen. Gleichermaßen ist es auch möglich, auf einem Fördermittel zwei oder mehrere Produkte gleichzeitig und beispielsweise nebeneinanderliegend in den Schneidbereich zu führen, um sowohl mittels eines oder beider Messer gleichzeitig mehrere Produkte aufzuschneiden oder zu zerteilen. Auch dadurch kann, insbesondere bei relativ schmalen Produkten, der Produktdurchsatz erhöht werden.

Die Anordnung zweier Fördermittel bedingt folglich nicht einen ausschließlich zweispurigen Betrieb, d.h. einem jeweiligen Fördermittel können mehrere Spuren zugeordnet sein, in denen jeweils ein Produkt verarbeitet wird.

Die Fördermittel können ferner insbesondere eine Auflagefläche für die Produkte aufweisen, welche beispielsweise von einer Gleitfläche oder einem Förderband gebildet sein kann. Darüber hinaus kann die Produktzufuhr ein Vorschub- und/oder Führungsmittel wie einen Produkthalter aufweisen, mittels dessen die Produkte beispielsweise während eines Vorschubs in den Schneidbereich in einem hinteren Bereich gehalten und geführt sein können. Insbesondere kann ein solcher Produkthalter dazu dienen, den Vorschub der Produkte kurzzeitig anzuhalten bzw. zu unterbrechen, um einen Abtransport gebildeter Scheiben und/oder Stücke zu ermöglichen. Ferner kann ein solcher Produkthalter bei einem mit einer Gleitfläche ausgebildeten Fördermittel dazu vorgesehen sein, den Vorschub der Produkte auf der Gleitfläche in den Schneidbereich zu bewirken.

Weitere mögliche Ausführungsformen sind den abhängigen Ansprüchen und der Beschreibung sowie der Zeichnung zu entnehmen.

Bei einigen Ausführungsformen können sich das erste Fördermittel und das zweite Fördermittel nebeneinander parallel versetzt entlang der Zuführrichtung erstrecken. Durch diese parallele Ausrichtung der Fördermittel kann insbesondere eine schmale Bauweise der Produktzufuhr und der gesamten Schneidvorrichtung erreicht werden. Ferner kann eine solche parallele Ausrichtung der Fördermittel und eine entsprechende Anordnung der Messer einen symmetrischen Aufbau der Schneidvorrichtung ermöglichen, sodass insbesondere sowohl die Fördermittel und die Messer als auch weitere Einrichtungen, beispielsweise zur Aufhängung und Fixierung der Fördermittel, gleichartig ausgebildet und mit lediglich entgegengesetzter Orientierung angeordnet sein können. Dies kann einen modularen Aufbau der Schneidvorrichtung mit gleichartigen und vorkonfektionierten Bauteilen ermöglichen, sodass insbesondere auch eine Montage der Schneidvorrichtung bzw. eine Demontage einzelner Komponenten, beispielsweise zur Reinigung oder Wartung, vereinfacht und beschleunigt werden kann.

Ferner kann durch eine parallele Ausrichtung der Fördermittel entlang der Zuführrichtung ein beidseitiger Zugang zu der Produktzufuhr erreicht werden, so dass Produkte flexibel auf die jeweiligen Fördermittel geladen werden können. Dies kann ein einfaches und schnell durchzuführendes Sortieren der Produkte ermöglichen. Alternativ ist es bei einem parallelen Aufbau auch möglich, lediglich an einer Seite eine Möglichkeit des Zugriffs auf die Produktzufuhr vorzusehen und an der gegenüberliegenden Seite beispielsweise ein Wandelement als Zugriffsschutz anzuordnen.

Es kann vorgesehen sein, dass sowohl das erste Fördermittel und das zweite Fördermittel als auch das erste Messer und das zweite Messer spiegelsymmetrisch zueinander bezüglich einer zwischen den Fördermitteln verlaufenden Trennebene angeordnet sind, wobei die Fördermittel insbesondere parallel versetzt zueinander entlang der Zuführrichtung ausgerichtet sein können. Insbesondere können dabei die Zuführrichtung und eine zu einer Fläche, auf welcher die in den Schneidbereich geführten Produkte aufliegen, senkrechte Richtung in der Trennebene verlaufen. Ein solcher spiegelsymmetrischer Aufbau der Schneidvorrichtung kann es insbesondere ermöglichen, im Wesentlichen gegensätzliche Produkte, beispielsweise Produkte von verschiedenen Hälften eines Tieres mit gegensätzlicher Orientierung von Knochen, bei gleichen Einstellungen des Schneidprozesses gleichzeitig und optimal angepasst durch eine Zuordnung der Produkte zu jeweiligen Fördermitteln zu verarbeiten. Insbesondere können dabei die spiegelsymmetrisch zueinander angeordneten Messer in gegensinnige Rotationen versetzbar sein, um mittels des ersten Fördermittels zugeführte Produkte in gleicher Weise wie dazu entgegengesetzt ausgerichtete und mittels des zweiten Fördermittels zugeführte Produkte aufschneiden und/oder zerteilen zu können.

Die Produktzufuhr kann eine gemeinsame Tragstruktur für die Fördermittel umfassen, wobei die Tragstruktur insbesondere fest mit einem sich am Boden abstützten Gestell verbunden sein kann. Die Fördermittel können somit an einer gemeinsamen Struktur befestigt sein, um eine schmale und kompakte Bauweise der Schneidvorrichtung zu ermöglichen. Ferner kann durch eine Fixierung der Tragstruktur an einem sich am Boden abstützenden Gestell erreicht werden, dass keine Relativbewegung der Tragstruktur bzw. der daran gehaltenen Fördermitteln zu dem Gestell erfolgt, sondern die Fördermittel in einer vorgegebenen Position gehalten werden. Dies kann eine zuverlässige Positionierung der Fördermittel zum Führen der Produkte in den Schneidbereich ermöglichen, wobei diese Positionierung insbesondere derart gewählt sein kann, dass die Fördermittel in einfacher Weise seitlich zugänglich sind, um beispielsweise Produkte aufzuladen.

Bei einigen Ausführungsformen kann die Tragstruktur einen sich in Zuführrichtung erstreckenden Mittenträger aufweisen, welcher zwischen dem ersten Fördermittel und dem zweiten Fördermittel angeordnet ist, wobei das erste Fördermittel und das zweite Fördermittel an dem Mittenträger gehalten sind.

Der Mittenträger kann somit gewissermaßen eine zentrale Struktur der Produktzufuhr bilden, an welcher die Fördermittel gehalten sind. Dabei können die Fördermittel insbesondere parallel versetzt zueinander in Bezug auf die Zuführrichtung angeordnet und an jeweiligen entgegengesetzten Seiten des Mittenträgers mit diesem verbunden sein. Entsprechend kann der Mittenträger auch die bereits genannte Trennebene definieren bzw. sich innerhalb dieser erstrecken, sodass sich ein spiegelsymmetrischer und kompakter Aufbau der Schneidvorrichtung bezüglich des Mittenträgers ergeben kann.

Durch einen solchen sich in Zuführrichtung erstreckenden und die Fördermittel tragenden Mittenträger kann erreicht werden, dass sich die Produktzufuhr und entsprechend auch die Schneidvorrichtung insgesamt vornehmlich entlang der Zuführrichtung erstrecken. Somit kann ein schmaler Aufbau der Schneidvorrichtung bezüglich einer Richtung senkrecht zu der Zuführrichtung erreicht werden.

Es kann vorgesehen sein, dass weitere Komponenten der Schneidvorrichtung, insbesondere elektronische Komponenten zum Antreiben der Fördermittel und/oder der Messer sowie zur Steuerung der Fördermittel und/oder der Messer, im Bereich des Mittenträgers und/oder unterhalb der Fördermittel angeordnet sind. Indem auch die Komponenten zur Steuerung und zum Antrieb der Messer und der Fördermittel in einem mittleren Bereich der Produktzufuhr bzw. unterhalb der Fördermittel angeordnet sein können, kann der dort zur Verfügung stehende und ohnehin durch die Produktzufuhr beanspruchte Raum genutzt werden, um eine kompakte Ausbildung der Schneidvorrichtung zu erreichen. Insbesondere kann dadurch eine Erstreckung der Schneidvorrichtung bzw. der Produktzufuhr senkrecht zu der Zuführrichtung minimiert werden. Auch ein Blockieren oder Stören des Zugangs zu den Fördermitteln, beispielsweise um Produkte aufzuladen, kann durch die Anordnung solcher Komponenten in einem mittleren Bereich bzw. unterhalb der Fördermittel vermieden werden.

Es kann vorgesehen sein, dass das erste Fördermittel und das zweite Fördermittel jeweilige Basisteile umfassen, die selektiv mit dem Mittenträger verbindbar oder von diesem lösbar sind. Beispielsweise kann das Fördermittel ein endlos umlaufendes Förderband aufweisen, welches über zwei Umlenkrollen geführt ist, die in einem solchen Basisteil gelagert sind. Ebenso kann ein als Gleitfläche und gegebenenfalls mit einem Vorschubmittel ausgebildetes Fördermittel mit einem solchen Basisteil verbunden sein oder einen als Basisteil fungierenden und mit dem Mittenträger verbindbaren Abschnitt aufweisen.

Indem die Basisteile selektiv mit dem Mittenteil verbindbar oder von diesem lösbar sein können, können die Fördermittel in einfacher Weise in die Produktzufuhr eingesetzt oder aus dieser entnommen werden. Insbesondere kann durch diese einfache Möglichkeit zum Anbringen und Lösen der Fördermittel eine Reinigung der Fördermittel vereinfacht und beschleunigt durchgeführt werden, indem der Zeitbedarf zu diesen Montage- bzw. Demontageschritten minimiert werden kann.

Dadurch kann den hinsichtlich der Verarbeitung von Fleischprodukten und insbesondere von Frischfleischprodukten einzuhaltenden Hygienebestimmungen entsprochen werden, ohne dass die regelmäßig erforderlichen Reinigungen der Fördermittel und das dazu notwendige Abnehmen und nachfolgende Verbinden der Fördermittel mit der Produktzufuhr relevante Betriebsunterbrechungen mit sich bringt. Ferner kann durch das Vorsehen solcher Basisteile ein modularer Aufbau der Produktzufuhr erreicht werden, so dass beispielsweise ein Fördermittel in einfacher Weise gegen ein gleichartig ausgebildetes anderes Fördermittel gewechselt werden kann, um den Schneidbetrieb während einer Reinigung des einen Fördermittels weiterführen zu können.

Der Mittenträger kann zumindest einen sich senkrecht zu der Zuführrichtung erstreckenden ersten Dorn aufweisen, auf welchen das erste Fördermittel aufsteckbar ist, und der Mittenträger kann zumindest einen sich senkrecht zu der Zuführrichtung und entgegengesetzt zu dem ersten Dorn erstreckenden zweiten Dorn aufweisen, auf welchen das zweite Fördermittel aufsteckbar ist.

Insbesondere können die Fördermittel dabei Basisteile aufweisen, welche auf die jeweiligen Dorne aufsteckbar sind. Beispielsweise können in den Basisteilen dazu Bohrungen ausgeführt sein, durch welche die jeweiligen Dorne führbar sind. Insbesondere kann der Mittenträger zumindest zwei erste Dorne und zumindest zwei zweite Dorne aufweisen, um die Basisteile der Fördermittel sicher und stabil zu lagern und ein Verkippen der Fördermittel zu verhindern.

Indem die Fördermittel zur selektiven Verbindung mit dem Mittenträger in einfacher Weise auf Dorne aufsteckbar sind, kann ein Anbringen der Fördermittel oder ein Entnehmen schnell und auf einfache Weise erfolgen. Sowohl die Montage der Produktzufuhr als auch ein Wechsel der Fördermittel oder ein Entnehmen, beispielsweise zu einem Säubern, können somit schnell und unkompliziert erfolgen.

Die entgegengesetzte Orientierung der ersten Dorne und der zweiten Dorne zueinander ermöglicht wiederum einen symmetrischen bzw. spiegelsymmetrischen Aufbau der Schneidvorrichtung bezüglich einer durch den Mittenträger definierten Trennebene, wobei die Fördermittel parallel versetzt zueinander an entgegengesetzten Seiten des Mittenträger angeordnet sind. Ebenfalls kann dadurch eine schmale Bauweise der Produktzufuhr erreicht werden, indem die sich vornehmlich in Zuführrichtung erstreckenden Fördermittel auf relativ kurze Dorne aufsteckbar sein können, sodass die Ausdehnung der Fördermittel senkrecht zu der Zuführrichtung letztlich im Wesentlichen durch die Breite der zu verarbeitenden Produkte vorgegeben sein kann.

Es kann vorgesehen sein, dass die auf die jeweiligen Dorne aufgesteckten Fördermittel durch jeweilige Fixiermittel an dem Mittenträger fixierbar sind. Beispielsweise können die Dorne dazu mit Gewinden ausgebildet sein, auf welche Fixierelemente geschraubt werden können, um ein Herabrutschen der Fördermittel von den Dornen zu verhindern. Ebenso können auf die Dorne aufsteckbare Fixierelemente vorgesehen sein. Dadurch können die Fördermittel insbesondere während des Betriebs zuverlässig mit dem Mittenträger und der Haltestruktur verbunden werden, wobei die Fixiermittel ferner dazu dienen können, die Fördermittel nach einem Aufstecken auf die Dorne in einer vorgegebenen Position anzuordnen und deren korrekte Positionierung sicherzustellen. Insbesondere können die Fixiermittel werkzeuglos bedienbar sein, um ein einfaches Anbringen an den Dornen zu ermöglichen.

Bei einigen Ausführungsformen kann die Produktzufuhr einen ersten Antrieb für das erste Fördermittel und einen zweiten Antrieb für das zweite Fördermittel umfassen, mittels derer das erste Fördermittel und das zweite Fördermittel unabhängig voneinander antreibbar sind.

Durch die Möglichkeit, das erste Fördermittel und das zweite Fördermittel unabhängig voneinander antreiben zu können, können auch die für das erste Produkt und das zweite Produkt vorgesehenen Schneidvorgänge vollkommen unabhängig voneinander erfolgen. Insbesondere können dadurch verschiedenartige Produkte mit dem ersten Messer und dem zweiten Messer in Scheiben und/oder Stücke geschnitten werden, wobei durch die unabhängigen Antriebe des ersten Fördermittels und des zweiten Fördermittels insbesondere verschieden große Stücke bzw. Scheiben von den Produkten abgetrennt werden können - unabhängig davon, ob die Produkte gleichartig oder von unterschiedlicher Art sind. Ferner ist es durch den unabhängigen Antrieb der beiden Fördermittel möglich, situationsabhängig auch lediglich eines der Fördermittel zum Führen von Produkten in den Schneidbereich zu nutzen, während das andere, nicht genutzte Fördermittel nicht angetrieben wird.

Um einen solchen unabhängigen Antrieb der Fördermittel zu realisieren, kann für jedes der Fördermittel ein zugeordneter Motor vorgesehen sein. Gleichermaßen kann zum Antrieb der Fördermittel lediglich ein Motor vorgesehen sein, wobei beispielsweise durch jeweilige Kupplungen ein gewünschter Anteil der Antriebsleistung auf die jeweiligen Fördermittel geleitet werden kann. Insbesondere können die Antriebe der Fördermittel, die beispielsweise sogenannte Trommelmotoren umfassen können, in einem Basisteil der Fördermittel angeordnet sein, insbesondere in einer mittels des Antriebs drehangetriebenen Umlenkachse für ein Förderband des Fördermittels, so dass der notwendige Bauraum für die Anordnung der Antriebe minimiert werden kann.

Bei einigen Ausführungsformen kann die Produktzufuhr für das erste Fördermittel und für das zweite Fördermittel zumindest einen jeweiligen Produkthalter umfassen, welcher dazu ausgebildet ist, das erste Produkt und/oder das zweite Produkt während des Führens in den Schneidbereich in einem hinteren Produktabschnitt zu halten.

Ein solcher Produkthalter kann das mittels des jeweiligen Fördermittels in den Schneidbereich geführte erste oder zweite Produkt in einem Endbereich halten und dadurch die Führung in den Schneidbereich unterstützen. Dabei kann insbesondere bei Fördermitteln, die ein endlos umlaufendes Förderband aufweisen, ein solcher Produkthalter vorgesehen sein, um einen voneinander unabhängigen Vorschub des ersten Produktes und des zweiten Produktes zu erreichen. Ferner kann das jeweilige gehaltene Produkt mittels eines Produkthalters beispielsweise kurzzeitig zurückgezogen oder angehalten werden, um das Führen in den Schneidbereich kurzzeitig zu unterbrechen und beispielsweise einen Abtransport einer bereits geschnittenen Scheibe bzw. eines bereits abgetrennten Stückes oder daraus gebildeter Portionen zu ermöglichen. Ferner kann ein solcher Produkthalter auch dazu vorgesehen sein, bei einem mit einer Gleitfläche ausgebildeten Fördermittel den Vorschub der Produkte in den Schneidbereich durchzuführen. Insbesondere ein mit einer Gleitfläche für die Produkte ausgebildetes Fördermittel kann einen derartigen Produkthalter und/oder einen Produktschieber zum Vorschub der Produkte in den Schneidbereich auch selbst umfassen.

Bei einigen Ausführungsformen kann die Zuführrichtung zumindest im Wesentlichen horizontal verlaufen und die Messer können eine jeweilige vertikal ausgerichtete Schneidebene definieren.

Eine solche horizontale Zuführung der Produkte in den Schneidbereich kann es ermöglichen, die Produkte ausreichend weit in den Schneidbereich vorzuschieben, um verhältnismäßig große Stücken bzw. dicke Scheiben abtrennen zu können.

Dabei kann vermieden werden, dass ein solcher weiter Vorschub der Produkte in den Schneidbereich, wie möglicherweise bei einer gegenüber der Horizontalen geneigten Zuführung, durch eine nicht parallel zur Zuführrichtung, beispielsweise horizontal, angeordnete Fläche zum Sammeln der abgetrennten Scheiben und/oder Stücke blockiert wird. Ferner kann ein weit vorgeschobenes Produkt, von welchem entsprechend ein großer bzw. langer Abschnitt unmittelbar vor einem Schnitt nicht mehr von dem Fördermittel gestützt ist, bereits auf einer ebenfalls horizontal ausgerichteten Fläche zum Sammeln der abgetrennten Scheiben und/oder Stücke aufliegen und durch diese gestützt werden, um beispielsweise ein Durchbiegen des Produktes zu verhindern. Insbesondere kann eine solche Fläche zum Sammeln der Produkte einen Portionierbereich bilden und als Förderband ausgebildet sein, um die abgetrennten Scheiben und/oder Stücke bzw. daraus gebildete Portionen an etwaige nachgelagerte Einrichtungen übergeben zu können.

Die durch die Messer definierten jeweiligen Schneidebenen können insbesondere in einer gemeinsamen Ebene liegen, so dass die Messer bezüglich der Zuführrichtung auf gleicher Höhe angeordnet sein können. Alternativ kann es vorgesehen sein, dass die Messer, insbesondere leicht, parallel versetzt zueinander angeordnet sind und entsprechend parallel versetzte Schneidebenen definieren. Gleichermaßen können auch etwaige Ablage- oder Portionierbereiche, in welchen die Scheiben und/oder Stücke des ersten bzw. des zweiten Produktes gesammelt oder aufgefangen werden, relativ zu den jeweiligen Schneidebenen und entsprechend bezüglich der Zuführrichtung auf gleicher Höhe oder versetzt zueinander angeordnet sein.

Bei einigen Ausführungsformen kann das erste Messer in einer ersten Messeraufnahme gehalten sein und das zweite Messer kann in einer zweiten Messeraufnahme gehalten sein, wobei die erste Messeraufnahme und die zweite Messeraufnahme in zueinander gegensinnige Rotationen versetzbar sind. Dabei können zum Versetzen der Messeraufnahmen in Rotation insbesondere jeweilige und unabhängig voneinander steuerbare Antriebe vorgesehen sein. Die Messer können bezüglich einer zwischen den Fördermitteln verlaufenden und insbesondere durch den genannten Mittenträger definierten Trennebene spiegelsymmetrisch zueinander in den Messeraufnahmen gehalten sein, so dass durch die gegensinnigen Rotationen beispielsweise gleichartige Produkte von verschiedenen Hälften eines Tieres einem jeweiligen der Messer zugeführt und durch diese Sortierung sämtliche der Produkte in gleicher Weise aufgeschnitten werden können.

Das erste Messer und das zweite Messer können als einarmige Sichelmesser mit schmalen gekrümmten Messerblättern ausgebildet sein. Ein solches einarmiges Messer kann insbesondere an einem seiner Enden an einer Messeraufnahme gehalten sein, so dass das Messer während einer Umdrehung lediglich einen Schnitt durchführt.

Durch die Ausbildung der Messer mit schmalen Messerblättern kann ein geringes Gewicht der Messer erreicht werden, was es insbesondere ermöglichen kann, die Messer während einer Umdrehung zu beschleunigen, um ausreichende Schneidkräfte zu generieren, bzw. abzubremsen, um den Schneidbereich für einen ausreichend langen Zeitraum für einen Vorschub der Produkte freizugeben. Die Krümmung des Messers bzw. dessen Schneide kann dabei insbesondere derart gewählt sein, dass bei einer rotierenden Bewegung des Messers zum Schneiden eines Produktes die Messerschneide in möglichst jeder Drehstellung entlang des Produktes gezogen wird, so dass ein ziehender Schnitt erfolgt. Dadurch können ein präzises Abtrennen einer Scheibe bzw. eines Stückes erreicht und die erforderlichen Schneidkräfte, insbesondere im Vergleich zu einer hackenden Bewegung der Messers, minimiert werden.

Bei einigen Ausführungsformen können das erste Messer und das zweite Messer eine jeweilige zumindest abschnittsweise spiralförmige Schneide aufweisen, wobei die Schneide insbesondere zumindest abschnittsweise in Form einer archimedischen Spirale und/oder zumindest abschnittsweise in Form einer logarithmischen Spirale verlaufen kann.

Durch eine solche spiralförmig gekrümmt verlaufende Schneide kann insbesondere erreicht werden, dass während einer Rotation des jeweiligen Messers in jeder Drehstellung ein ziehender Schnitt durch das aufzuschneidende Produkt erfolgt. Insbesondere kann die Schneide dabei ausgehend von einem in einer Messeraufnahme gehaltenen Ende ausgehend von einer archimedischen Spirale in eine logarithmische Spirale übergehen, um einen leichtgängigen und ziehenden Schnitt erreichen zu können.

Es kann vorgesehen sein, dass das erste Messer und das zweite Messer eine jeweilige, zumindest abschnittsweise verzahnte Schneide aufweisen. Eine solche Schneide kann sich insbesondere dazu eignen, faserreiche und/oder knochenaufweisende Fleischprodukte präzise in Scheiben und/oder Stücke zu zerschneiden bzw. zu zerteilen, was gerade bei der Verarbeitung von Frischfleischprodukten häufig erforderlich ist. Dabei können die Schneiden der Messer sowohl durchgängige und gleichmäßige Verzahnungen aufweisen als auch lediglich abschnittsweise verzahnt oder mit sich verändernden Verzahnungen ausgebildet sein. Beispielsweise kann eine Verzahnung der Schneide lediglich in einem Abschnitt vorgesehen sein, mit welchem die Schneide während einer Rotation des Messers einen Bereich durchquert, in welchem die Lage eines Knochens eines aufzuschneiden Produktes zu erwarten ist.

Bei einigen Ausführungsformen kann eine Steuereinrichtung zur Steuerung der Rotationsgeschwindigkeiten der rotierenden Messer vorgesehen sein, wobei die Steuereinrichtung dazu ausgebildet sein kann, die Rotationen der Messer während eines Umlaufs zum Abtrennen einer Scheibe und/oder eines Stücks zu beschleunigen und/oder abzubremsen. Insbesondere kann die Steuereinrichtung dabei zu einem unabhängigen Steuern der Rotationsgeschwindigkeiten der Messer ausgebildet sein.

Indem die Rotationsgeschwindigkeiten der Messer während eines Umlaufs veränderbar sind, kann insbesondere durch ein Abbremsen eines der Messer eine ausreichende Zeit zum Vorschub eines Produktes in bzw. durch den Schneidbereich gewonnen werden, bevor das Messer in das Produkt eingreift und eine Scheibe und/oder ein Stück abtrennt. Dies ermöglicht es, Produkte relativ weit in den Schneidbereich vorzuschieben, um relativ dicke Scheiben bzw. große Stücke, beispielsweise bedarfsgerechte Bratenstücke, abtrennen zu können. Durch die Möglichkeit, die Messer nach einem Abbremsen während einer Rotation wieder zu beschleunigen, können dennoch die zu einem Aufschneiden eines Fleischproduktes und insbesondere eines möglicherweise knochenhaltigen Frischfleischproduktes notwendigen Kräfte generiert werden. Dazu können die Messer insbesondere als einarmige Sichelmesser mit schmalen gekrümmten Messerblättern und entsprechend geringem Gewicht ausgebildet sein, so dass möglichst geringe Trägheitskräfte während eines Abbremsens bzw. Beschleunigens der Messer zu überwinden sind.

Bei einigen Ausführungsformen kann im Schneidbereich eine Messerführung angeordnet sein, welche einen jeweiligen Umlaufspalt für die Messer aufweist, der durch eine bezüglich der Zuführrichtung vordere Begrenzung und eine bezüglich der Zuführrichtung hintere Begrenzung definiert ist.

Der jeweilige Umlaufspalt bzw. dessen Begrenzungen bilden somit eine Führung für die Messer in Bezug auf die Zuführrichtung und die Messer laufen in dem Umlaufspalt um, so dass auch die durch die Messer definierten Schneidebenen in dem Umlaufspalt liegen. Durch die Begrenzung etwaiger Messerbewegungen in Zuführrichtung bzw. der Führung des Messers durch die vordere und hintere Begrenzung können eine sichere Führung und ein gerader Schnitt auch bei großen Schneidkräften während eines Aufschneidens eines Produkts erreicht werden. Ferner kann einem Ausweichen oder Verkanten der Messer aufgrund etwaiger während des Schneidens auftretenden Kraftspitzen bzw. Schläge entgegengewirkt werden. Insbesondere dann, wenn die Messer in einer gemeinsamen Schneidebene umlaufen, kann die Messerführung für die Messer einen gemeinsamen Umlaufspalt aufweisen. Ferner können die vorderen und hinteren Begrenzungen an einem gemeinsamen Bauteil für die Messer oder an jeweiligen gesonderten Bauteilen ausgebildet sein.

Die vordere Begrenzung und die hintere Begrenzung können miteinander fluchtende Durchlässe für das erste Produkt und/oder für das zweite Produkt aufweisen. Dabei können die vordere und die hintere Begrenzung eine rahmenartige Umrandung der jeweiligen Durchlässe bilden, durch welche die Produkte in den Schneidbereich geführt werden können. Insbesondere kann die vordere Begrenzung dabei eine Schneidkante bilden, die durch die rahmenartige Ausbildung des Durchlasses als eine sogenannte Schneidbrille ausgebildet sein kann, und als solche gewissermaßen den Abschluss der Produktzufuhr bilden.

Bei einigen Ausführungsformen können das erste Messer und/oder das zweite Messer während einer Umdrehung die maximale lichte Weite der Durchlässe abdecken. Dadurch kann erreicht werden, dass die Messer sowohl in Richtung des Endes, mit welchem das jeweilige Messer mit einer Messeraufnahme verbunden ist, als auch in Richtung des Endes, welches die Messerspitze bildet, während der gesamten Umdrehung bzw. während des gesamten Schnittes von der vorderen und der hinteren Begrenzung umgeben und durch diese in Zuführrichtung geführt und stabilisiert sind. Es kann somit vermieden werden, dass beispielsweise die Messerspitze während eines Schnitts frei in dem Durchlass steht, und etwaige in Zuführrichtung auf das Messer wirkende Kräfte können stets an zwei Enden auf die Begrenzungen abgeleitet werden. Einem eventuellen Verbiegen, Ausweichen oder Verkanten des Messers während eines Schnitts kann somit durch diese beidseitige Stützung entgegengewirkt werden.

Bei einigen Ausführungsformen kann die Schneidvorrichtung einen Portionierbereich aufweisen, in welchem aus den abgetrennten Schneiden und/oder Stücken Portionen gebildet werden, die zumindest eine Scheibe und/oder zumindest ein Stück umfassen. Ein solcher Portionierbereich kann sich insbesondere unmittelbar an den Schneidbereich anschließen bzw. in diesen übergehen, wobei die abgetrennten Scheiben und/oder Stücke auf dem Portionierbereich abgelegt und beispielsweise zu einer Portion zusammengestellt werden können. Der Portionierbereich kann zumindest ein Förderband umfassen, mittels dessen die vollständigen Portionen insbesondere an eine nachgelagerte Fördereinrichtung übergeben werden können, um die Portionen weiteren Verarbeitungsschritten und beispielsweise einer Verpackungsmaschine zuführen zu können.

Die Erfindung betrifft ferner ein Verfahren zum Aufschneiden und/oder Zerteilen von Fleischprodukten, insbesondere Frischfleischprodukten, wobei zumindest zwei Produkte entlang einer Zuführrichtung in einen Schneidbereich in einer Schneidvorrichtung - insbesondere einer Schneidvorrichtung wie hierin offenbart - geführt werden, in welchem von jedem der zumindest zwei Produkte mittels zumindest eines jeweiligen rotierenden Messers Scheiben und/oder Stücke abgetrennt werden.

Durch das Zuführen zumindest zweier Produkte in den Schneidbereich, wobei von den Produkten mittels jeweiliger zugeordneter Messer Scheiben und/oder Stücke abgetrennt werden, können insbesondere gleichzeitig zwei Produkte unabhängig voneinander und in an das jeweilige Produkt optimal angepasster Weise aufgeschnitten werden. Dies kann es ermöglichen, bei einem Aufschneiden und/oder Zerteilen von Fleischprodukten einen hohen Produktdurchsatz bei gleichzeitiger optimaler Anpassung des Schneidprozesses an die jeweiligen Produkte zu erreichen.

Die zumindest zwei Produkte können mittels jeweiliger parallel versetzt zueinander angeordneter Fördermittel in den Schneidbereich geführt werden. Die parallele Anordnung solcher, insbesondere unabhängig voneinander antreibbarer Fördermittel kann eine schmale Bauweise der Schneidvorrichtung ermöglichen, wobei durch die Zuordnung der Produkte zu einem jeweiligen Fördermittel und einem jeweiligen Messer ein vollständig unabhängiger Schneidvorgang erreicht werden kann.

Es kann vorgesehen sein, dass die Produkte entlang einer horizontalen Richtung in den Schneidbereich geführt werden, wobei die Messer in einer jeweiligen vertikal ausgerichteten Schneidebene rotieren.

Es kann vorgesehen sein, dass die Messer während einer Umdrehung zum Abtrennen einer Scheibe und/oder eines Stückes beschleunigt und/oder abgebremst werden. Dabei kann es das Abbremsen des Messers ermöglichen, ein Produkt weit in den Schneidbereich vorzuschieben, so dass daraufhin ein relativ großes Stück bzw. eine relativ dicke Scheibe abgetrennt werden kann. Durch die Möglichkeit, das Messer nach einem Abbremsen wieder zu beschleunigen, können insbesondere die zu einem Aufschneiden der Fleischprodukte notwendigen Schneidkräfte trotz der zwischenzeitlich verlangsamten Rotationsgeschwindigkeit generiert werden.

Aus den abgetrennten Scheiben und/oder den abgetrennten Stücken können Portionen gebildet werden, die zumindest eine Scheibe und/oder ein Stück umfassen, wobei die gebildeten Portionen insbesondere mittels einer nachgelagerten Fördereinrichtung weiter gefördert werden können. Insbesondere können die Portionen dabei in einem bewegbaren Portionierbereich gebildet werden, der beispielsweise ein in Zuführrichtung umlaufendes Förderband aufweisen kann, um die vollständig gebildeten Portionen an eine nachgelagerte Fördereinrichtung übergeben zu können. Ferner kann die Portionsbildung durch einen bewegbaren Portionierbereich direkt beeinflusst werden, indem der Abstand der Scheiben und/oder Stücke einer Portion beispielsweise durch einen Vorzug des Portionierbereichs in Zuführrichtung verändert bzw. angepasst werden kann. Es kann auch vorgesehen sein, dass der Portionierbereich in weiteren Richtungen, beispielsweise senkrecht zu der Zuführrichtung, bewegbar ist, um z.B. in dieser Querrichtung überlappende oder geschindelte Portionen bilden zu können.

Die nachgelagerte Fördereinrichtung kann die gebildeten Portionen insbesondere weiteren Verarbeitungsschritten zuführen. Beispielsweise kann die Fördereinrichtung die gebildeten Portionen einer nachgelagerten Verpackungsmaschine zuführen und in dafür vorgesehene Verpackungsplätze - beispielsweise in durch Tiefziehen in einer Folienbahn erzeugte Vertiefungen oder in separate Verpackungsteile, z.B. sogenannte Trays - ein- bzw. auflegen, so dass die Portionen mit zumindest einer Scheibe bzw. zumindest einem Stück fertig verpackt an einen Kunden bzw. einen Verkäufer geliefert werden können.

Die Erfindung wird im Folgenden rein beispielhaft anhand eines Ausführungsbeispiels unter Bezugnahme auf die Zeichnungen beschrieben. Es zeigen:
- Fig. 1A und 1B: eine Seitenansicht bzw. eine Draufsicht auf eine Verarbeitungslinie zum Verarbeiten von Fleischprodukten mit einer Schneidvorrichtung,
- Fig. 2A und 2B: eine perspektivische Rückansicht bzw. eine perspektivische Vorderansicht auf die Schneidvorrichtung,
- Fig. 3A und 3B: eine Draufsicht bzw. eine Seitenansicht auf eine Produktzu-fuhr der Schneidvorrichtung,
- Fig. 4: eine perspektivische Rückansicht auf die Schneidvorrichtung bei abgenommenen Fördermitteln der Produktzufuhr und ab-genommenem Gestell, und
- Fig. 5A und 5B: Vorderansichten auf einen Schneidbereich zur Veranschauli-chung der Anordnung eines ersten Messers und eines zwei-ten Messers sowie deren Ausbildung.

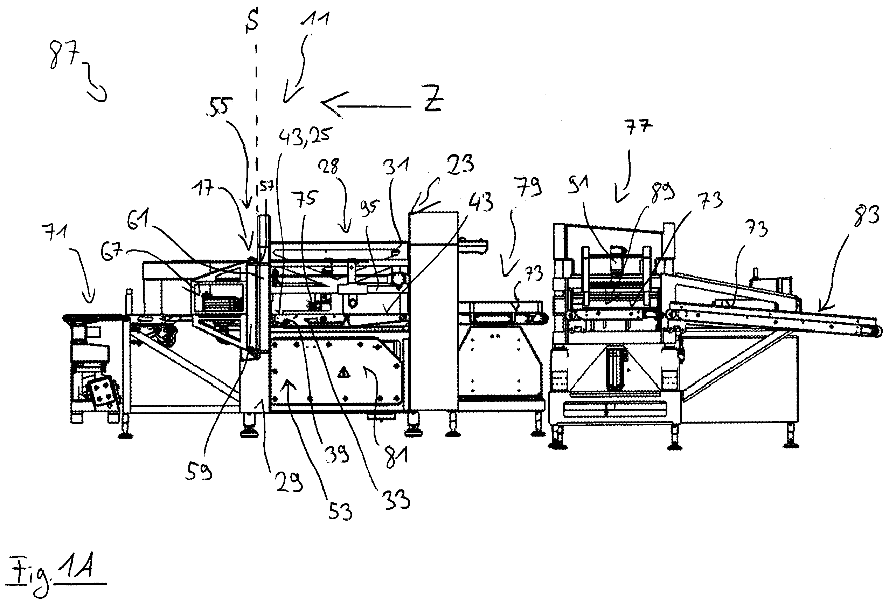

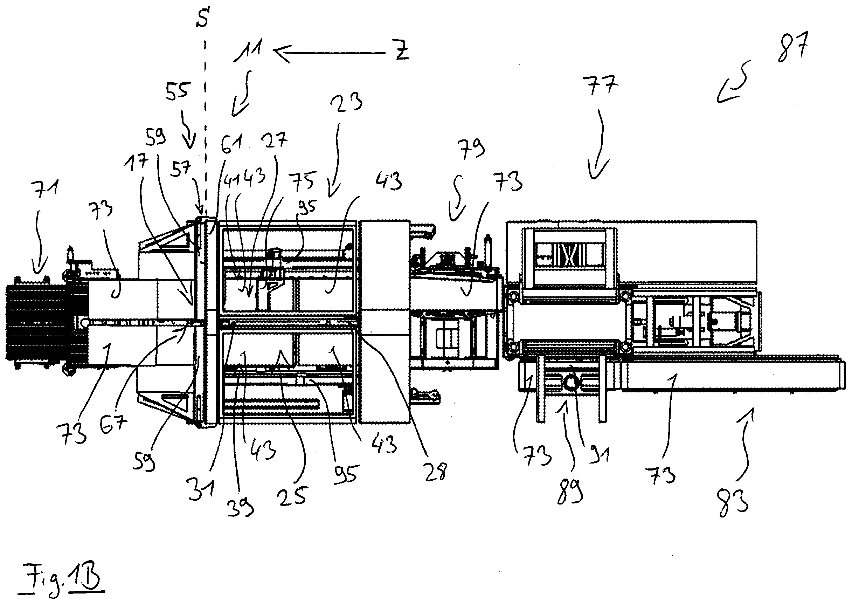

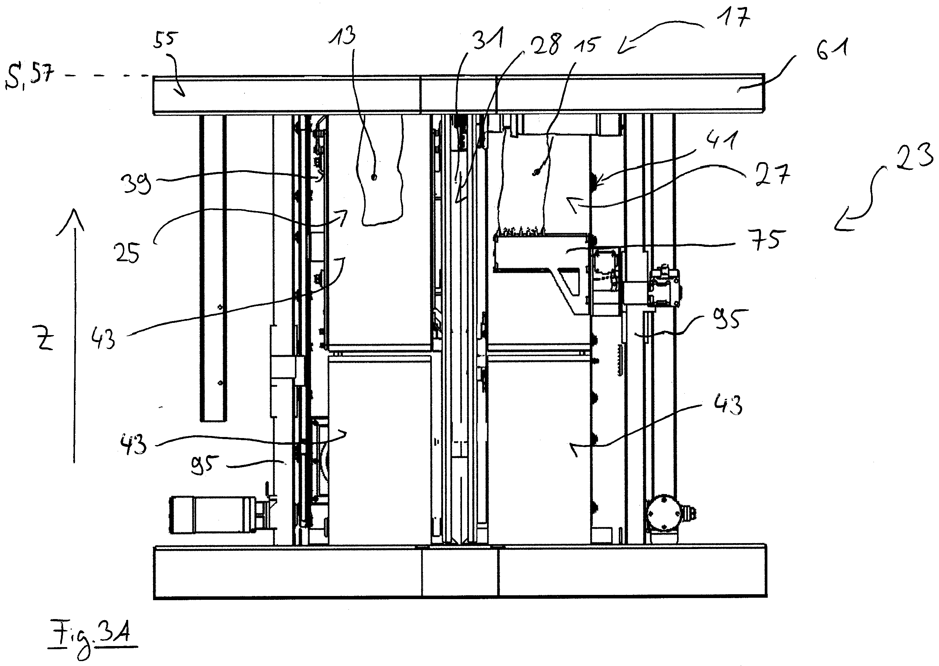

Die Fig. 1A und 1B zeigen Ansichten einer Verarbeitungslinie 87 zum Verarbeiten von Fleischprodukten und insbesondere Frischfleischprodukten. Dabei werden in den Fig. 1A und 1B nicht, jedoch in Fig. 3A gezeigte Produkte 13 und 15 entlang einer Zuführrichtung Z verschiedenen Stationen zugeführt, an welchen Bearbeitungsschritte erfolgen.

Die Produkte 13 und 15 können auf eine Zuführung 83 geladen werden, welche ein in Zuführrichtung Z umlaufendes Förderband 73 aufweist. Durch einen Vorzug dieses Förderbandes 73 der Zuführung 83 gelangen die Produkte 13 und 15 in einen von einem weiteren Förderband 73 gebildeten Einbringabschnitt 89, in welchem eine Einbringeinrichtung 91 angeordnet ist. Diese ist dazu ausgebildet, die Produkte 13 und 15 durch eine Bewegung senkrecht zu der Zuführrichtung Z in eine Presse 77 einzubringen. Mittels der Presse 77 können die Produkte 13 und 15, die als Naturprodukte zunächst meist eine unregelmäßige Form aufweisen, komprimiert und dadurch in eine vorgegebene bzw. für weitere Verarbeitungsschritte notwendige Form gebracht werden.

Die gepressten Produkte 13 und 15 werden aus der Presse 77 auf eine Verteil- und Sortiereinrichtung 79 geführt, welche ein in Zuführrichtung Z umlaufendes Förderband 73 aufweist. Dabei ist die Verteil- und Sortiereinrichtung 79 dazu ausgebildet, dieses Förderband 73 senkrecht zu der Zuführrichtung Z zu bewegen, um die Produkte 13 und 15 an ein erstes Fördermittel 25 oder ein zweites Fördermittel 27 einer Produktzufuhr 23 zu übergeben.

Diese Produktzufuhr 23 bildet einen Teil einer Schneidvorrichtung 11 zum Aufschneiden und/oder Zerteilen der Produkte 13 und 15 in Scheiben und/oder Stücke, welche im Folgenden näher beschrieben wird.

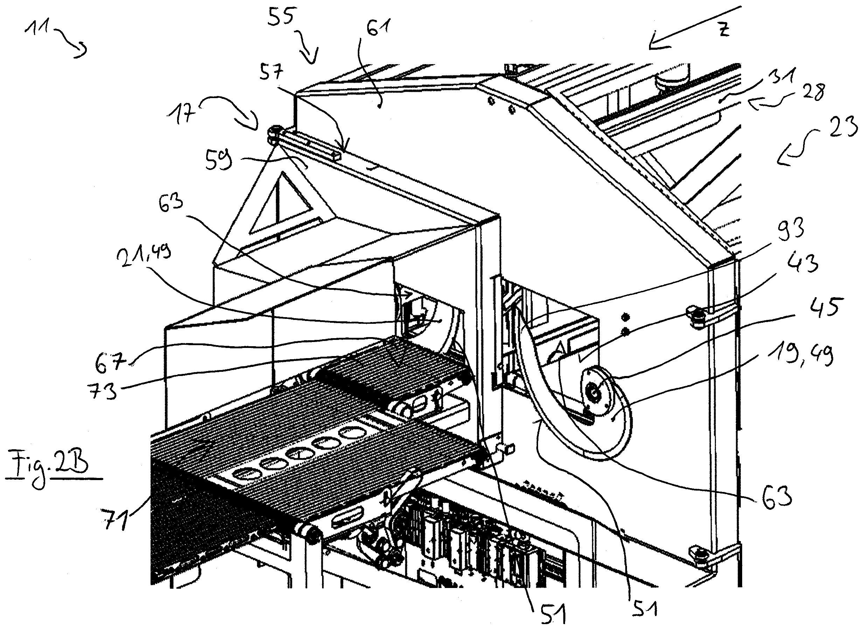

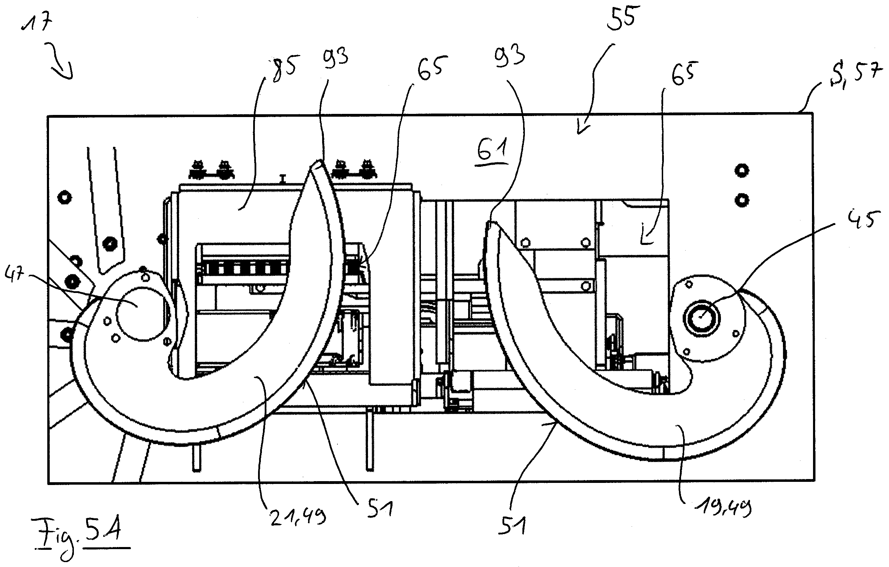

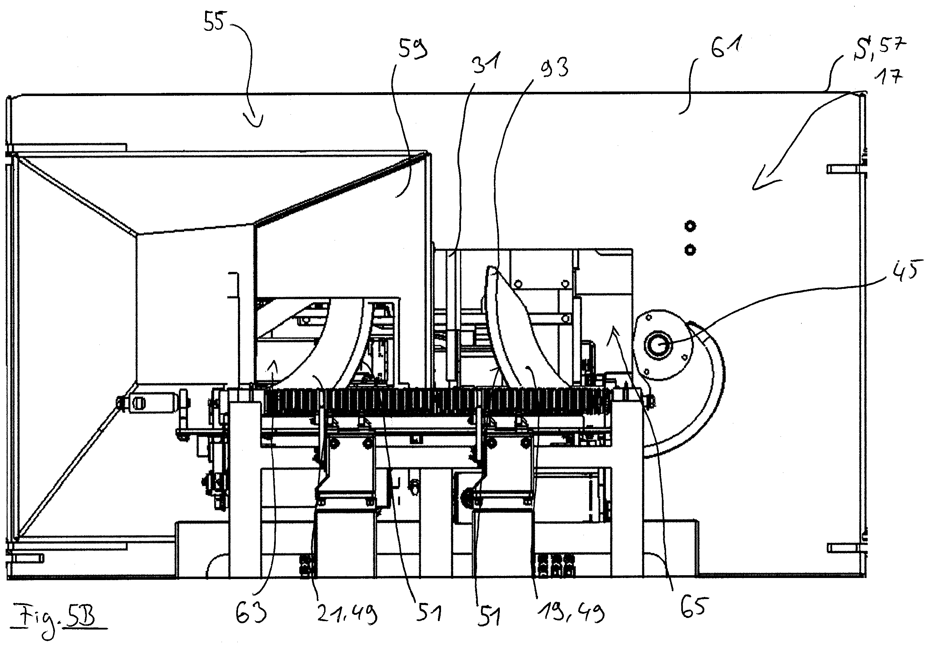

Die Produktzufuhr 23 ist dazu ausgebildet, die Produkte 13 und 15 einem Schneidbereich 17 zuzuführen, in welchem mittels in einer Schneidebene S rotierender Messer 19 und 21 von den Produkten 13 und 15 Scheiben und/oder Stücke abgetrennt werden (vgl. Fig. 2B, 5A und 5B). Dabei kann mittels des ersten Fördermittels 25 zumindest ein erstes Produkt 13 in den Schneidbereich 17 geführt werden, während gleichzeitig dazu mittels des zweiten Fördermittels 27 zumindest ein zweites Produkt 15 in den Schneidbereich geführt werden kann. Ferner ist das erste Messer 19 dem ersten Fördermittel 25 zugeordnet und dazu vorgesehen, Scheiben bzw. Stücke von dem ersten Produkt 13 abzutrennen, während das zweite Messer 21 dem zweiten Fördermittel 27 zugeordnet und dazu vorgesehen ist, Scheiben bzw. Stücke von dem zweiten Produkt 15 abzutrennen.

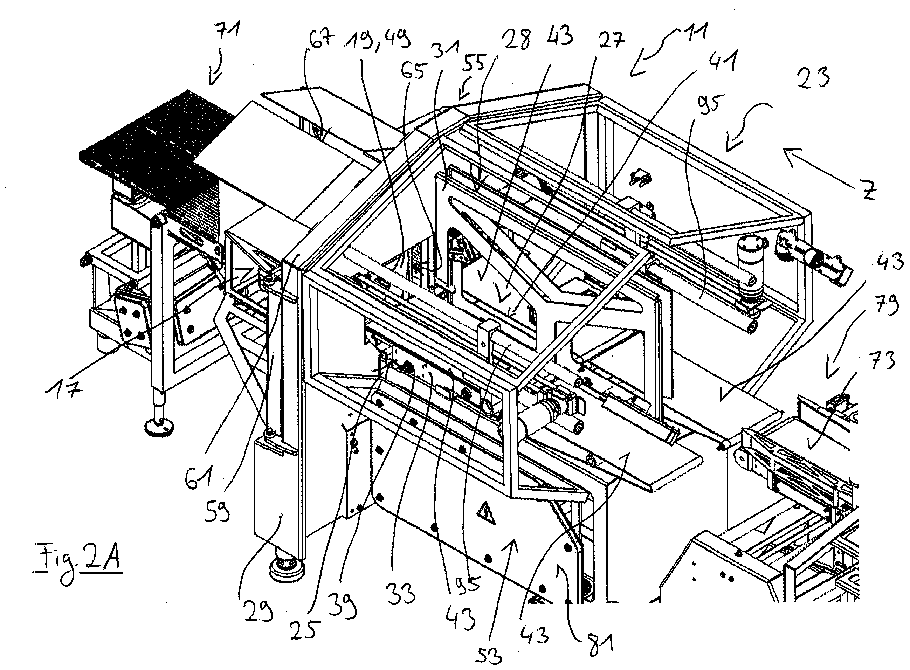

Zum Führen der Produkte 13 und 15 in den Schneidbereich 17 umfassen sowohl das erste Fördermittel 25 als auch das zweite Fördermittel 27 zwei jeweilige Förderbänder 43, die in Zuführrichtung Z umlaufen (vgl. insbesondere Fig. 2A und 3A). Dabei erstrecken sich die Fördermittel 25 und 27 im Wesentlichen in Zuführrichtung Z und sind parallel versetzt zueinander angeordnet, sodass eine schmale Bauweise der Produktzufuhr 23 erreicht werden kann.

Die Förderbänder 43 der Fördermittel 25 und 27 sind auf jeweiligen Basisteilen 33 gehalten, welche jeweilige Antriebe 39 bzw. 41 der Fördermittel 25 bzw. 27 umfassen. Durch diese Antriebe 39 bzw. 41 kann ein unabhängiges Führen der mittels des ersten Fördermittels 25 in den Schneidbereich 17 geführten ersten Produkte 13 und der mittels des zweiten Fördermittels 27 in den Schneidbereich 17 geführten zweiten Produkte 15 erreicht werden. Insbesondere können beispielsweise erste Produkte 13 und zweite Produkte 15 unterschiedlicher Art gleichzeitig in den Schneidbereich 17 vorgeschoben und bedarfsgerecht verschieden große Stücke bzw. verschieden dicke Scheiben von den Produkten 13 und 15 abgetrennt werden. Dazu können die Fördermittel 25 und 27 beispielsweise mit jeweiligen angepassten Geschwindigkeiten betrieben werden, um die Produkte 13 und 15 vor einem Abtrennen einer Scheibe bzw. eines Stückes unter Berücksichtigung der jeweiligen gewünschten Scheibendicke ausreichend weit und unabhängig voneinander in den Schneidbereich 17 zu führen.

Indem den Fördermitteln 25 und 27 jeweilige Messer 19 bzw. 21 zugeordnet sind, kann für die Produkte 13 und 15 ein vollständig unabhängiger Schneidvorgang erreicht werden. Dies kann es ermöglichen, mittels der Schneidvorrichtung 11 gleichzeitig zumindest zwei Produkte 13 und 15 zu verarbeiten und einen entsprechend hohen Produktdurchsatz zu erreichen, wobei der Schneidvorgang trotz dieser gleichzeitigen Verarbeitung an das jeweilige Produkt 13 oder 15 optimal angepasst erfolgen kann.

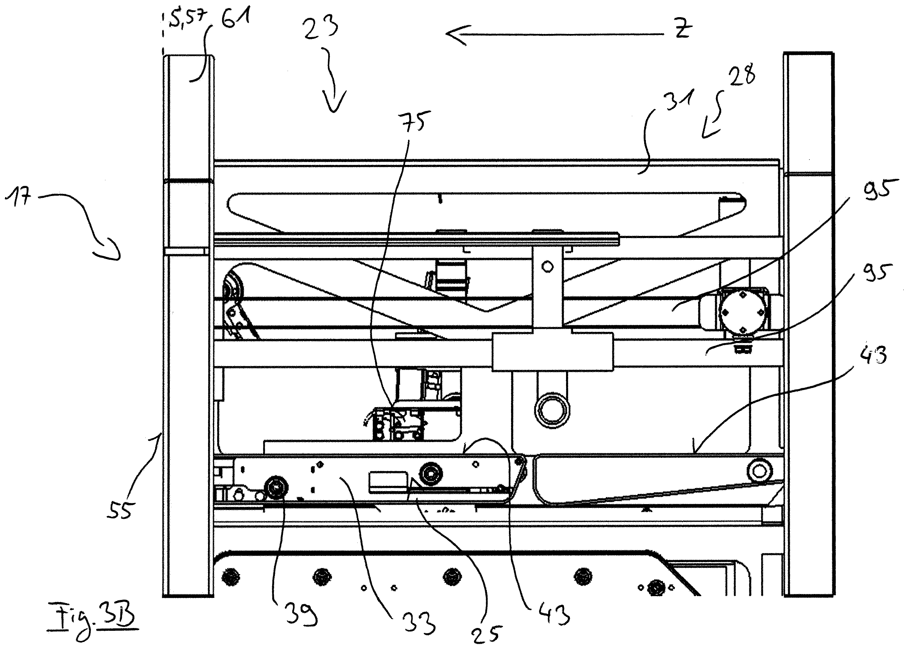

Um die Führung der Produkte 13 und 15 in den Schneidbereich 17 zu unterstützen bzw. zu kontrollieren, umfasst die Produktzufuhr 23 ferner Produkthalter 75 für die Fördermittel 25 und 27, wobei lediglich der dem zweiten Fördermittel 27 zugeordnete Produkthalter 75 in den Figuren gezeigt ist. Diese Produkthalter 75 sind dazu ausgebildet, die Produkte 15 bzw. 13 in einem hinteren Bereich zu halten (vgl. Fig. 3A) und können insbesondere dazu dienen, die Produkte 15 bzw. 13 kurzzeitig zurückzuziehen bzw. anzuhalten, um den Vorschub in den Schneidbereich 17 zu unterbrechen und einen Abtransport bereits gebildeter Scheiben und/oder Stücke zu ermöglichen. Um einen dauerhaften Eingriff der Produkthalter 75 in die vorgesehenen Endbereiche der Produkte 13 und 15 während deren Führung in den Schneidbereich 17 zu ermöglichen, sind jeweilige Führungen 95 vorgesehen, in welchen die Produkthalter 75 beispielsweise mittels innerhalb der Führungen 95 angeordneter Spindeltriebe in und entgegen der Zuführrichtung Z bewegt werden können. Diese Führungen 95 sind dabei oberhalb der Förderbänder 43 angeordnet, sodass auch diese Führungen 95 die Ausdehnung der Produktzufuhr 23 senkrecht zu der Zuführrichtung Z nicht bzw. allenfalls geringfügig vergrößern (vgl. auch Fig. 3B), so dass die Breite der Schneidvorrichtung hierdurch nicht unnötig vergrößert wird.

Im gezeigten Ausführungsbeispiel verläuft die Zuführrichtung Z horizontal, wobei die durch die Messer 19 und 21 definierte Schneidebene S vertikal ausgerichtet ist. Durch diese horizontale Führung der Produkte 13 und 15 in den Schneidbereich 17 kann ein weiterer Vorschub der Produkte 13 und 15 durch die Schneidebene S ermöglicht werden, um verhältnismäßig dicke Scheiben bzw. große Stücke, die insbesondere bei der Verarbeitung von Frischfleischprodukten gewünscht sein können, von den Produkten 13 und 15 abtrennen zu können.

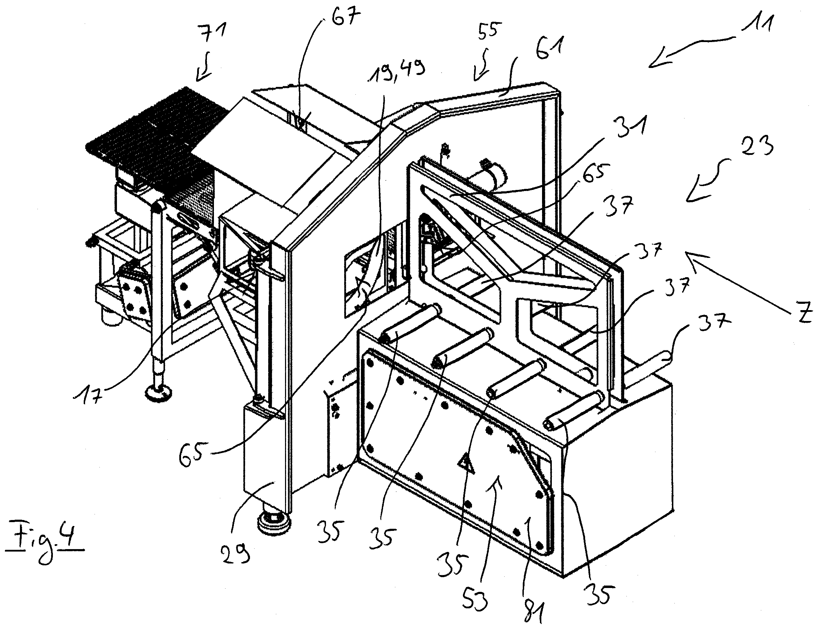

Wie insbesondere die Fig. 2B zeigt, ist der Schneidebene S ein Portionierbereich 67 nachgelagert, in welchem die abgetrennten Scheiben bzw. Stücke der Produkte 13 und 15 gesammelt und Portionen gebildet werden, die zumindest eine Scheibe bzw. ein Stück umfassen. Dieser weist für jedes der Produkte 13 und 15 ein mehrere Riemen umfassendes und in Zuführrichtung Z umlaufendes Förderband 73 auf, wobei lediglich das Förderband 73, welches dem zweiten Fördermittel 27 zugeordnet ist, in der Fig. 2B gezeigt ist. Das Förderband 73 des Portionierbereichs 67, welches dem ersten Fördermittel 25 zugeordnet ist, ist hingegen in den Fig. 2A und 4 zu erkennen. Neben dem Auffangen und Abtransportieren abgetrennter Scheiben bzw. Stücke dienen die Förderbänder 73 des Portionierbereichs 67 auch dazu, die horizontal weit durch die Schneidebene S vorgeschobenen Produkte 13 und 15 während eines Abschneidens zu stützen, sodass beispielsweise ein Verbiegen der Produkte 13 und 15 vermieden werden kann.

Durch einen Vorzug der Förderbänder 73 des Portionierbereichs 67 können gebildete Portionen aus zumindest einer Scheibe zumindest eines Stückes in Zuführrichtung Z an eine nachgelagerte Fördereinrichtung 71 übergeben werden, welche die Portionen weiteren Verarbeitungsschritten und beispielsweise einer Verpackungsmaschine zum Verpacken der Portionen zuführen kann (vgl. auch Fig. 1A und 1B). Ferner kann durch einen Vorzug der Förderbänder 73 auf die Anordnung mehrerer zu einer Portion zusammengefasster Scheiben bzw. Stücke eingewirkt werden, sodass beispielsweise die Scheiben einer Portion einander in Zuführrichtung Z überlappend angeordnet werden können.

Wie die perspektivische Rückansicht der Fig. 2A zeigt, weist die Produktzufuhr 23 eine gemeinsame Tragstruktur 28 für die Fördermittel 25 und 27 auf. Diese Tragstruktur 28 umfasst einen sich im Wesentlichen in Zuführrichtung Z erstreckenden Mittenträger 31, der zwischen den Fördermitteln 25 und 27 angeordnet ist und diese hält. Dieser Mittenträger 31 bildet damit gewissermaßen eine zentrale Struktur der Produktzufuhr 23 und definiert eine vertikale Trennebene, bezüglich welcher die Fördermittel 25 und 27 sowie die Messer 19 und 21 symmetrisch bzw. spiegelsymmetrisch angeordnet sind (vgl. insbesondere auch Fig. 3A). Ferner ist der Mittenträger 31 fest mit einem sich am Boden abstützenden Gestell 29 der Schneidvorrichtung 11 verbunden, so dass weder der Mittenträger 31 noch die daran gehaltenen Fördermittel 25 und 27, abgesehen von der Umlaufbewegung der Förderbänder 43 in Zuführrichtung Z, relativ zu dem Gestell 29 bewegbar sind und die Fördermittel 25 und 27 stets in der vorgesehenen Ausrichtung zum Führen der Produkte 13 und 15 in den Schneidbereich 17 verbleiben.

Indem der zwischen den Fördermitteln 25 und 27 angeordnete Mittenträger 31 die Fördermittel 25 und 27 hält, sind diese bezüglich der Zuführrichtung Z parallel versetzt zueinander angeordnet. Dies ermöglicht eine schmale und symmetrische Bauweise der Schneidvorrichtung 11 in Bezug auf eine Richtung senkrecht zu der Zuführrichtung Z, so dass ein gleichzeitiges Aufschneiden der Produkte 13 und 15 mittels eines einzigen und kompakten maschinellen Aufbaus erreicht werden kann.

Ferner ermöglicht dieser symmetrische Aufbau der Produktzufuhr 23 mit an gegenüberliegenden Seiten an dem Mittenträger 31 gehaltenen Fördermitteln 25 und 27 einen beidseitigen Zugang zu der Produktzufuhr 23, so dass beispielsweise von beiden Seiten Produkte 13 und 15 auf die Fördermittel 25 und 27 geladen werden können (vgl. Fig. 3A und 3B). Insbesondere kann ein solches, beispielsweise manuelles, Beladen der Produkte 13 und 15 vorgesehen sein, wenn die Schneidvorrichtung 11 nicht als Teil der Verarbeitungslinie 87 vorgesehen ist, sondern der Schneidbetrieb unabhängig von weiteren Bearbeitungsschritten erfolgt.

Unterhalb der Förderbänder 43 der Fördermittel 25 und 27 ist ein Schaltschrank 81 angeordnet, welcher die elektronischen Komponenten der Schneidvorrichtung 11 und insbesondere eine Steuereinrichtung 53 umfasst. Dadurch ist der Schaltschrank 81 in einem Bereich angeordnet, in welchem die Produktzufuhr 23 ohnehin eine gewisse Ausdehnung zur Anbringung der Fördermittel 25 und 27 aufweisen muss, sodass diese Ausdehnung durch den Schaltschrank 81 zumindest im Wesentlichen nicht erhöht wird und eine kompakte und schmale Bauweise der Produktzufuhr 23 erreicht werden kann. Ferner dient der Schaltschrank 81 auch dazu, den Mittenträger 31 zu stützen und fest mit dem Gestell 29 zu verbinden (vgl. Fig. 4).

Die in dem Schaltschrank 81 angeordnete Steuereinrichtung 53 kann insbesondere dazu ausgebildet sein, die Antriebe 39 bzw. 41 unabhängig voneinander anzusteuern, so dass auch die Produkte 13 und 15 unabhängig und beispielsweise mit verschiedenen Geschwindigkeiten in den Schneidbereich 17 geführt werden können. Ferner kann die Steuereinrichtung 53 dazu ausgebildet sein, die Rotationen der Messer 19 und 21 zu steuern und insbesondere deren Rotationsgeschwindigkeiten während eines Umlaufes zu verändern, wie nachfolgend noch beschrieben ist.

Wie Fig. 4 zeigt, weist der Mittenträger 31 vier sich senkrecht zu der Zuführrichtung Z erstreckende erste Dorne 35 auf, auf welche das erste Fördermittel 25 bzw. dessen Basisteil 33 aufsteckbar ist. Ebenfalls senkrecht zu der Zuführrichtung Z und entgegengesetzt zu den ersten Dornen 35 sind vier zweite Dorne 37 zum Aufstecken des zweiten Fördermittels 27 vorgesehen. Dies ermöglicht es, die Fördermittel 25 und 27 in einfacher Weise selektiv mit dem Mittenträger 31 zu verbinden oder von diesem zu lösen, so dass die Fördermittel 25 und 27 beispielsweise schnell und unkompliziert zum Zweck eines Säuberns aus der Produktzufuhr 23 entnommen werden können. Ferner kann durch einen solchen modularen Aufbau der Produktzufuhr 23 ein Verwenden gleicher und auswechselbarer Bauteile erreicht werden und auch das Anbringen bzw. Montieren der Fördermittel 25 und 27 kann erleichtert werden. Um die Fördermittel 25 und 27 insbesondere während eines Schneidvorgangs zuverlässig in einer vorgegebenen Position zu halten, können ferner Fixierelemente vorgesehen sein, welche auf die Dorne 35 und 37 aufsteckbar oder aufschraubbar sein können, um ein Herabrutschen der Fördermittel 25 und 27 von den Dornen 35 und 37 zu verhindern.

Wie insbesondere aus der Fig. 5A hervorgeht, ist das erste Messer 19 in einer ersten Messeraufnahme 45 und das zweite Messer 21 in einer zweiten Messeraufnahme 47 gehalten. Ferner sind die Messer 19 und 21 bezüglich der bereits genannten und durch den Mittenträger 31 definierten vertikalen Trennebene, die parallel zu der Zuführrichtung Z und mittig zwischen den Fördermitteln 25 und 27 verläuft, spiegelsymmetrisch zueinander orientiert.

Es kann vorgesehen sein, dass die Messer 19 und 21 bzw. die zugeordneten Messeraufnahmen 45 und 47 durch die Steuereinrichtung 53 in gegensinnige Rotationen versetzbar sind. Dadurch kann beispielsweise erreicht werden, dass von verschiedenen Hälften eines Tieres entnommene Produkte 13 bzw. 15 gleichzeitig mittels der Schneidvorrichtung 11 verarbeitet werden und die Schneidvorgänge optimal an die jeweiligen Produkte angepasst erfolgen können. Beispielsweise können die Produkte 13 und 15 verschiedener Hälften eines Tieres derart auf die Fördermittel 25 bzw. 27 sortiert werden, dass ein Knochen beispielsweise sowohl auf dem ersten Fördermittel 25 als auch auf dem zweiten Fördermittel 27 stets innenliegend oder außenliegend bezüglich der genannten Trennebene in den Schneidbereich 17 geführt wird. Durch die gegensinnige Rotation der spiegelsymmetrisch zueinander angeordneten Messer 19 und 21 kann dabei für beide Produkte 13 und 15 ein annähernd gleicher Schnitt durchgeführt werden, wobei insbesondere zuerst oder zuletzt der Knochen durchschnitten werden kann. Insbesondere kann eine solche Sortierung automatisch mittels der in den Fig. 1A und 1B gezeigten Verteil- und Sortiereinrichtung 79 erfolgen.

Die Messer 19 und 21 sind als einarmige Sichelmesser mit schmalen Messerblättern 49 ausgebildet. Dies ermöglicht es, die Messer 19 und 21 mit relativ geringem Gewicht auszubilden, so dass die Messer 19 und 21 während einer Rotation zum Abtrennen einer Scheibe und/oder eines Stückes beschleunigt und abgebremst werden können. Ein solches, beispielsweise durch die Steuereinrichtung 53 veranlasstes Abbremsen der Messer 19 und 21 während einer Rotation kann die für einen Vorschub in den Schneidbereich 17 zur Verfügung stehende Zeit erhöhen, währenddessen die Messer 19 und 21 nicht in die Produkte 13 und 15 eingreifen. Entsprechend können die Produkte 13 und 15 ausreichend weit in den Schneidbereich 17 vorgeschoben werden, um relativ dicke Scheiben oder große Stücke abtrennen zu können. Durch ein auf ein Abbremsen folgendes Beschleunigen der Messer 19 und 21 können dennoch die zu einem Abtrennen einer Scheibe bzw. eines Stückes notwendigen und insbesondere zu einem Verarbeiten von Frischfleischprodukten hohen Schneidkräfte generiert werden.

Die jeweiligen Schneiden 51 der Messer 19 und 21 verlaufen ausgehend von der jeweiligen Messeraufnahme 45 oder 47 zunächst in Form einer archimedischen Spirale und hin zu den Messerspitzen 93 in Form einer logarithmischen Spirale. Diese Ausbildung der Schneiden 51 der Messer 19 und 21 kann es ermöglichen, während einer Rotation der Messer 19 und 21 zum Abtrennen einer Scheibe bzw. eines Stückes von den Produkten 13 und 15 stets einen ziehenden Schnitt durchzuführen, um diesen präzise und ohne das Auftreten großer Kraftspitzen durchführen zu können. Ferner können die Schneiden 51 zumindest abschnittsweise verzahnt ausgebildet sein, um insbesondere ein Durchtrennen von Knochen, welche beispielsweise zu verarbeitende Frischfleischprodukte aufweisen können, zu ermöglichen.

Wie insbesondere die Fig. 2B und 5B zeigen, ist in dem Schneidbereich 17 eine Messerführung 55 angeordnet, welche eine hintere Begrenzung 61 und jeweilige vordere Begrenzungen 59 für die Messer 19 und 21 aufweist, wobei lediglich die vordere Begrenzung 59 für das zweite Messer 21 gezeigt ist. Dabei bilden die hintere Begrenzung 61 und die vordere Begrenzung 59 einen jeweiligen Umlaufspalt 57, in welchem die Messer 19 und 21 umlaufen und in welchem sich die Schneidebene S erstreckt. Durch die Anordnung der Messer 19 und 21 in einem solchen Umlaufspalt 57 können die Messer 19 und 21 bezüglich der Zuführrichtung Z zuverlässig und stabil geführt werden und einem etwaigen Ausweichen, Verbiegen oder Verkanten der Messer 19 und 21 aufgrund während eines Schnittes erfolgender Kraftspitzen bzw. Schläge kann entgegengewirkt werden. Um das Messer 21 auch in Richtung der hinteren Begrenzung 61 während eines Schnittes eng zu führen und den durch die Verbindung der Messeraufnahme 47 mit der hinteren Begrenzung 61 bedingten Versatz des Messers 21 von der hinteren Begrenzung 61 auszugleichen, ist ein in Fig. 5A gezeigter Begrenzungsaufsatz 85 vorgesehen.

Ein gleichartiger Begrenzungsaufsatz 85 kann auch für das Messer 19 vorgesehen sein.

Ferner weist die hintere Begrenzung 61 für die Produkte 13 und 15 einen jeweiligen hinteren Durchlass 65 auf, durch welchen die Produkte 13 und 15 in den Schneidbereich 17 gelangen. Die vordere Begrenzung 59 weist einen dazu fluchtenden vorderen Durchlass 63 auf, so dass die hintere Begrenzung 61 und die vordere Begrenzung 59 neben dem Umlaufspalt 57 für die Messer 19 und 21 einen rahmenartigen Durchlass für die Produkte 13 und 15 in den Schneidbereich 17 bilden. Dadurch kann eine definierte Führung der Produkte 13 und 15 in den Schneidbereich 17 sowie eine Positionierung und Stützung während des Abtrennens einer Scheibe bzw. eines Stückes erreicht werden, wobei insbesondere der hintere Durchlass 65 als Schneidkante wirken und gewissermaßen den Abschluss der Produktzufuhr 23 bilden kann.

Wie beispielsweise die Fig. 5A und 5B zeigen, decken die Messer 19 und 21 die maximale lichte Weite der Durchlässe 63 und 65 ab, so dass die Messer 19 und 21 während eines Schnittes jederzeit sowohl an den von den Messeraufnahmen 45 bzw. 47 gehaltenen Enden als auch an den Messerspitzen 93 beidseitig von der hinteren Begrenzung 61 und der vorderen Begrenzung 59 gestützt und geführt sind. Die Messerspitzen 93 stehen somit zu keiner Zeit frei in den Durchlässen 63 bzw. 65, so dass in Zuführrichtung Z auf die Messer 19 und 21 wirkende Kräfte stets beidseitig auf die Begrenzungen 59 und 61 abgeleitet werden können.

### Bezugszeichenliste

- 11: Schneidvorrichtung
- 13: erstes Produkt
- 15: zweites Produkt
- 17: Schneidbereich
- 19: erstes Messer
- 21: zweites Messer
- 23: Produktzufuhr
- 25: erstes Fördermittel
- 27: zweites Fördermittel
- 28: Tragstruktur
- 29: Gestell
- 31: Mittenträger
- 33: Basisteil
- 35: erster Dorn
- 37: zweiter Dorn
- 39: erster Antrieb
- 41: zweiter Antrieb
- 43: Förderband
- 45: erste Messeraufnahme
- 47: zweite Messeraufnahme
- 49: Messerblatt
- 51: Schneide
- 53: Steuereinrichtung
- 55: Messerführung
- 57: Umlaufspalt
- 59: vordere Begrenzung
- 61: hintere Begrenzung
- 63: vorderer Durchlass
- 65: hinterer Durchlass
- 67: Portionierbereich
- 71: nachgelagerte Fördereinrichtung
- 73: Förderband
- 75: Produkthalter
- 77: Presse
- 79: Verteil- und/oder Sortiereinrichtung
- 81: Schaltschrank
- 83: Zuführung
- 85: Begrenzungsaufsatz
- 87: Verarbeitungslinie
- 89: Einbringabschnitt
- 91: Einbringeinrichtung
- 93: Messerspitze
- 95: Führung des Produkthalters.

- S: Schneidebene
- Z: Zuführrichtung

## Patentansprüche

1. Schneidvorrichtung (11) zum Aufschneiden und/oder Zerteilen von Fleischprodukten (13, 15), insbesondere Frischfleischprodukten, mit einer Produktzufuhr (23), die dazu ausgebildet ist, zumindest ein erstes Produkt (13) und zumindest ein zweites Produkt (15) gleichzeitig entlang einer Zuführrichtung (Z) in einen Schneidbereich (17) zu führen, in welchem von den Produkten (13, 15) mittels eines ersten rotierenden Messers (19) und mittels eines zweiten rotierenden Messers (21) Scheiben und/oder Stücke abgetrennt werden,
wobei die Produktzufuhr (23) ein erstes Fördermittel (25) zum Führen des zumindest einen ersten Produktes (13) in den Schneidbereich (17) und ein zweites Fördermittel (27) zum Führen des zumindest einen zweiten Produktes (15) in den Schneidbereich (17) aufweist,
wobei das erste Messer (19) dem ersten Fördermittel (25) zugeordnet ist und zu einem Abtrennen von Scheiben und/oder Stücken von dem zumindest einen ersten Produkt (13) vorgesehen ist und wobei das zweite Messer (21) dem zweiten Fördermittel (27) zugeordnet ist und zu einem Abtrennen von Scheiben und/oder Stücken von dem zumindest einen zweiten Produkt (15) vorgesehen ist.

2. Schneidvorrichtung (11) nach Anspruch 1,
wobei sich das erste Fördermittel (25) und das zweite Fördermittel (27) nebeneinander parallel versetzt entlang der Zuführrichtung (Z) erstrecken.

3. Schneidvorrichtung (11) nach Anspruch 1 oder 2,
wobei die Produktzufuhr (23) eine gemeinsame Tragstruktur (28) für die Fördermittel (25, 27) umfasst, insbesondere wobei die Tragstruktur (28) fest mit einem sich am Boden abstützenden Gestell (29) verbunden ist, insbesondere wobei die Tragstruktur (28) einen sich in Zuführrichtung (Z) erstreckenden Mittenträger (31) aufweist, welcher zwischen dem ersten Fördermittel (25) und dem zweiten Fördermittel (27) angeordnet ist, wobei das erste Fördermittel (25) und das zweite Fördermittel (27) an dem Mittenträger (31) gehalten sind, insbesondere wobei das erste Fördermittel (25) und das zweite Fördermittel (27) jeweilige Basisteile (33) umfassen, die selektiv mit dem Mittenträger (31) verbindbar oder von diesem lösbar sind.

4. Schneidvorrichtung (11) nach Anspruch 3,
wobei der Mittenträger (31) zumindest einen sich senkrecht zu der Zuführrichtung (Z) erstreckenden ersten Dorn (35) aufweist, auf welchen das erste Fördermittel (25) aufsteckbar ist, und wobei der Mittenträger (31) zumindest einen sich senkrecht zu der Zuführrichtung (Z) und entgegengesetzt zu dem ersten Dorn (35) erstreckenden zweiten Dorn (27) aufweist, auf welchen das zweite Fördermittel (27) aufsteckbar ist.

5. Schneidvorrichtung (11) nach einem der vorhergehenden Ansprüche,
wobei die Produktzufuhr (23) einen ersten Antrieb (39) für das erste Fördermittel (25) und einen zweiten Antrieb (41) für das zweite Fördermittel (27) umfasst, mittels derer das erste Fördermittel (25) und das zweite Fördermittel (27) unabhängig voneinander antreibbar sind, und/oder wobei das erste Fördermittel (25) und das zweite Fördermittel (27) zumindest ein jeweiliges Förderband (43) umfassen, und/oder wobei die Produktzufuhr (23) für das erste Fördermittel (25) und/oder das zweite Fördermittel (27) zumindest einen jeweiligen Produkthalter (75) umfasst, welcher dazu ausgebildet ist, das erste Produkt (13) und/oder das zweite Produkt (15) während des Führens in den Schneidbereich (17) in einem hinteren Produktabschnitt zu halten, und/oder wobei die Zuführrichtung (Z) zumindest im Wesentlichen horizontal verläuft und wobei die Messer (19, 21) eine jeweilige vertikal ausgerichtete Schneidebene (S) definieren.

6. Schneidvorrichtung (11) nach einem der vorhergehenden Ansprüche,
wobei das erste Messer (19) in einer ersten Messeraufnahme (45) gehalten ist und wobei das zweite Messer (21) in einer zweiten Messeraufnahme (47) gehalten ist, wobei die erste Messeraufnahme (45) und die zweite Messeraufnahme (47) in zueinander gegensinnige Rotationen versetzbar sind.

7. Schneidvorrichtung (11) nach einem der vorhergehenden Ansprüche,
wobei das erste Messer (19) und das zweite Messer (21) als einarmige Sichelmesser mit schmalen gekrümmten Messerblättern (49) ausgebildet sind, und/oder wobei das erste Messer (19) und das zweite Messer (21) eine jeweilige zumindest abschnittsweise spiralförmige Schneide (51) aufweisen, insbesondere wobei die Schneide (51) zumindest abschnittsweise in Form einer archimedischen Spirale und/oder zumindest abschnittsweise in Form einer logarithmischen Spirale verläuft.

8. Schneidvorrichtung (11) nach einem der vorhergehenden Ansprüche,
wobei das erste Messer (19) und das zweite Messer (21) eine jeweilige zumindest abschnittsweise verzahnte Schneide (51) aufweisen.

9. Schneidvorrichtung (11) nach einem der vorhergehenden Ansprüche,
wobei eine Steuereinrichtung (53) zur Steuerung der Rotationsgeschwindigkeiten der rotierenden Messer (19, 21) vorgesehen ist, wobei die Steuereinrichtung (53) dazu ausgebildet ist, die Rotationen der Messer (19, 21) während eines Umlaufs zum Abtrennen einer Scheibe und/oder eines Stücks zu beschleunigen und/oder abzubremsen.

10. Schneidvorrichtung (11) nach einem der vorhergehenden Ansprüche,
wobei im Schneidbereich (17) eine Messerführung (55) angeordnet ist, welche einen jeweiligen Umlaufspalt (57) für die Messer (19, 21) aufweist, der durch eine bezüglich der Zuführrichtung (Z) vordere Begrenzung (59) und eine bezüglich der Zuführrichtung (Z) hintere Begrenzung (61) definiert ist, insbesondere wobei die vordere Begrenzung (59) und die hintere Begrenzung (61) miteinander fluchtende Durchlässe (63, 65) für das erste Produkt (13) und/oder für das zweite Produkt (15) aufweisen, insbesondere wobei das erste Messer (19) und/oder das zweite Messer (21) während einer Umdrehung die maximale lichte Weite der Durchlässe (63, 65) abdecken.

11. Schneidvorrichtung (11) nach einem der vorhergehenden Ansprüche,
wobei die Schneidvorrichtung (11) einen Portionierbereich (67) aufweist, in welchem aus den abgetrennten Scheiben und/oder Stücken Portionen (69) gebildet werden, die zumindest eine Scheibe und/oder zumindest ein Stück umfassen.

12. Verfahren zum Aufschneiden und/oder Zerteilen von Fleischprodukten (13, 15), insbesondere Frischfleischprodukten, wobei zumindest zwei Produkte (13, 15) entlang einer Zuführrichtung (Z) in einen Schneidbereich (17) einer Schneidvorrichtung (11), insbesondere einer Schneidvorrichtung (11) nach einem der vorhergehenden Ansprüche, geführt werden, in welchem von jedem der zumindest zwei Produkte (13, 15) mittels zumindest eines jeweiligen rotierenden Messers (19, 21) Scheiben und/oder Stücke abgetrennt werden.

13. Verfahren nach Anspruch 12,
wobei die zumindest zwei Produkte (13, 15) mittels jeweiliger parallel versetzt zueinander angeordneter Fördermittel (25, 27) in den Schneidbereich (17) geführt werden, und/oder wobei die Produkte (13, 15) entlang einer horizontalen Richtung (Z) in den Schneidbereich (17) geführt werden, wobei die Messer (19, 21) in einer jeweiligen vertikal ausgerichteten Schneidebene (S) rotieren.

14. Verfahren nach Anspruch 12 oder 13,
wobei die Messer (19, 21) während einer Umdrehung zum Abtrennen einer Scheibe und/oder eines Stückes beschleunigt und/oder abgebremst werden.

15. Verfahren nach einem der Ansprüche 12 bis 14,
wobei aus den abgetrennten Scheiben und/oder den abgetrennten Stücken Portionen (69) gebildet werden, die zumindest eine Scheibe und/oder ein Stück umfassen, insbesondere wobei die gebildeten Portionen (69) mittels einer nachgelagerten Fördereinrichtung (71) weitergefördert werden.
